# EUROPÄISCHE PATENTSCHRIFT

(11) **EP 2 154 884 B1**
(45) Veröffentlichungstag und Bekanntmachung des Hinweises auf die Patenterteilung: **13.06.2012**
(21) Anmeldenummer: 09010294.8
(22) Anmeldetag: 10.08.2009
(51) Int. Cl.: H04N 7/10, H04H 20/63

(54) **Antennensteckdose**
Antenna socket
Prise d'antenne

(43) Veröffentlichungstag der Anmeldung: 17.02.2010
(73) Patentinhaber: JULTEC Technology GmbH, 78256 Steisslingen (DE)
(72) Erfinder: Müller, Klaus, 78256 Steisslingen (DE)
(74) Vertreter: Weiss, Peter

(56) Entgegenhaltungen:
- EP-A2- 1 750 383
- DE-A1- 10 005 763

## Beschreibung

Der Gegenstand der Anmeldung betrifft eine Antennensteckdose nach dem Oberbegriff des Anspruchs 1 und ein Verfahren zum Betreiben einer Antennensteckdose nach dem Oberbegriff des nebengeordneten Anspruchs.

Aus dem Stand der Technik sind Satellitenempfangsanlagen bekannt, welche es ermöglichen, mehrere Teilnehmer in einer Ein-Kabel-Anordnung mit Fernsehsignalen zu versorgen. Eine solche Versorgung in einem Ein-Kabel-System stellt eine gewisse technische Herausforderung dar, da im Allegemeinen nicht alle Frequenzbänder einer Satellitenempfangsanlage über das eine Kabel des Ein-Kabel-Systems übertragen werden können. Hintergrund ist, dass an der Satellitenempfangsanlage vier sich teilweise überlappende Frequenzbereiche anliegen, nämlich Low Band Vertical, High Band Vertical, Low Band Horizontal, High Band Horizontal. Diese vier Frequenzbereiche weisen zusammen ein zu großes Spektrum auf, als dass sie über ein Kabel übertragen werden können. Daher muss eine Auswahl an einem Frequenzumsetzer vorgenommen werden, welcher einerseits mit den vier Frequenzbändern der Satellitenempfangsantenne versorgt wird und andererseits von Teilnehmern gewünschte Frequenzen bzw. Programme in das Ein-Kabel-System einspeist.

Die bekannte technische Lösung ist, dass die Empfangsgeräte der Teilnehmer jeweils ein bestimmtes Frequenzband zugewiesen bekommen oder benützen (User Band), wobei kein User Band zweifach belegt wird. Das Empfangsgerät kann dann mit der dazugehörigen User Band-ID über eine Steuersignalübertragung über das Ein-Kabel-System den Frequenzumsetzer anweisen, auf dem betreffenden User Band einen anderen Ausschnitt der Satellitenempfangsfrequenzen bereitzustellen. Diese Technik ist auch in der EN 50494 in Europa genormt.

Nachteilig an dieser Technik ist allerdings, dass bei einem falsch konfigurierten Empfangsgerät, absichtlich oder unabsichtlich, die übertragene Frequenz auf einem von einem anderen Empfangsgerät genutzten User Band verändert werden kann.

Aus der DE 100 05 763 A1 ist ein Antennensignal-Hausverteilnetz für die Übertragung von Fernseh- oder Rundfunkprogrammen bekannt, wobei vorgeschlagen wird, Antennenanschlussdosen des Hausverteilnetzes mit Adressbausteinen zu versehen, so dass die Antennensteckdosen durch eine Zentrale in dem Hausvereilnetz identifizierbar sind.

Aufgabe der Erfindung ist es daher, eine Vorrichtung anzugeben, mit welcher ein Verändern eines "fremden" User Bandes durch ein Empfangsgerät vermieden werden kann.

Die Aufgabe wird mit einer Antennensteckdose nach dem Anspruch 1 und einem Verfahren nach dem nebengeordneten Anspruch gelöst.

Erfindungsgemäß ist vorgesehen, dass die Antennensteckdose einen Stammleitungseingang zum Anschluss einer Stammleitung aufweist, wobei die Stammleitung das eine Kabel des Ein-Kabel-Systems ist. Mit dem Stammleitungseingang ist ein Abzweig verbunden, an dem ein Empfangsgerät anschließbar ist. Die Antennensteckdose verfügt über einen ersten Speicher zum Speichern von Berechtigungs-Konfigurationsdaten. Solche Berechtigungskonfigurationsdaten können beispielsweise die User Band-ID des Empfangsgerätes bzw. des jeweiligen Teilnehmers sein. Ebenso ist vorstellbar, dass die Berechtigungskonfigurationsdaten weitere Informationen oder andere Informationen enthalten, beispielsweise Typ- und Seriennummer eines für den Betrieb an dieser Antennensteckdose freigegebenen Empfangsgerätes. Weiterhin verfügt die erfindungsgemäße Antennensteckdose über eine Kontrolleinheit, die konfiguriert ist, um ein über den Abzweig eingehendes Steuersignal in Abhängigkeit von den Berechtigungskonfigurationsdaten über den Stammleitungseingang auf die Stammleitung zu übertragen. So überprüft die Kontrolleinheit vorzugsweise, ob ein eingehendes Steuersignal von dem Empfangsgerät eine User-ID aufweist, die mit der User-ID der Berechtigungskonfigurationsdaten übereinstimmt. Nur bei einer solchen Übereinstimmung wird vorteilhafterweise eine Übertragung vorgenommen. Falls der Vergleich mit den Berechtigungskonfigurationsdaten negativ ist, wird das Steuersignal nicht übertragen. Unter "nicht übertragen" fällt dabei vorzugsweise auch ein Abbruch einer bereits begonnenen Übertragung. Dies bietet den Vorteil, dass das Empfangsgerät lediglich das User Band umstellen kann, welches dem Empfangsgerät zugeordnet ist. Dies bietet den Vorteil, dass eine absichtliche oder unabsichtliche Verstellung eines anderen User Bandes unmöglich wird.

Vorteilhafterweise umfasst die Antennensteckdose einen zweiten Speicher zum Zwischenspeichern des Steuersignals. Dies bietet den Vorteil, dass bei einem nicht-Erfolgen einer Übertragung das Steuersignal zu einem späteren Zeitpunkt übertragen werden kann. Ein Grund für eine spätere Übertragung ist beispielsweise, falls festgestellt wird, dass auf der Stammleitung gerade eine Übertragung eines anderen Steuersignals eines anderen Empfangsgerätes stattfindet. In diesem Fall bietet ein Zwischenspeichern des Steuersignals Vorteile, um es später, wenn die Stammleitung frei ist, zu übertragen. Weiterhin kann der zweite Speicher auch dazu benutzt werden, Steuersignale über einen längeren Zeitraum zu speichern, beispielsweise um eine Fehlerverfolgung zu ermöglichen. Der zweite Speicher kann bei vorteilhaften Ausführungsformen der Erfindung zusammen oder integral mit dem ersten Speicher ausgebildet sein.

Vorteilhafterweise ist die Kontrolleinheit dazu eingerichtet, Steuerbefehle des Steuersignals syntaktisch und/oder inhaltlich zu verändern. Dies bietet beispielsweise die Möglichkeit, dass bei einer Feststellung, dass das Steuersignal nicht den Berechtigungskonfigurationsdaten entspricht, das Steuersignal so zu verändern, dass es den Berechtigungskonfigurationsdaten entspricht. Auf diese Weise kann selbst bei einem falsch konfigurierten Empfangsgerät durch die Antennensteckdose sichergestellt werden, dass ein einwandfreier Betrieb ermöglicht wird. Eine Möglichkeit ist, die User Band-ID zu korrigieren.

Vorteilhafterweise ist der Abzweig mit einem Tiefpassfilter verbunden. Der Tiefpassfilter ermöglicht eine Grundversorgung der Antennensteckdose über den Abzweig durch das Empfangsgerät.

Vorteilhafterweise ist zwischen dem Stammleitungseingang und dem Abzweig ein einstellbares Dämpfungsglied oder ein einstellbarer Verstärker angeordnet. Auf diese

Weise lässt sich die Auskoppeldämpfung, insbesondere für das User Band, welches den Berechtigungskonfigurationsdaten entspricht, einstellen.

Vorteilhafterweise umfasst die Antennensteckdose eine Kommunikationseinheit, die geeignet ist, um über die Stammleitung mit einer entfernten Kontrollstation zu kommunizieren. Die entfernte Kontrollstation kann beispielsweise der Frequenzumsetzer sein. Dies bietet den Vorteil, dass zentral, beispielsweise am Frequenzumsetzer oder an einem anderen entfernten Ort über eine Internet-Verbindung eine Einstellung der Berechtigungskonfigurationsdaten möglich ist. So ist mit der Erfindung auch möglich, den auswählbaren Frequenzbereich für das Empfangsgerät einzuschränken, indem in der Antennensteckdose die Steuersignale dahingehend überprüft werden, ob mit den Steuersignalen ein berechtigter Frequenzbereich ausgewählt wird oder nicht, wobei die Steuersignale dementsprechend weitergeleitet werden oder nicht.

Bei vorteilhaften Ausführungsformen der Erfindung weist die Antennensteckdose noch einen Stammleitungsausgang auf, sodass die Stammleitung durch die Antennensteckdose durchschleifbar ist. Der Stammleitungsausgang ist mit dem Stammleitungseingang verbunden. Vorteilhafterweise befinden sich alle oben beschriebenen Einrichtungen innerhalb eines Gehäuses der Antennensteckdose. Die inhaltliche oder syntaktische Veränderung von Steuersignalen oder Steuerbefehlen des Steuersignals bietet außerdem die Möglichkeit, Empfangsgeräte, welche lediglich für acht User-Frequenzbänder (acht verschiedene User Bands) ausgelegt sind, an modernen Frequenzumsetzern zu betreiben, welche mehr als acht User Bands pro Ableitung unterstützen. Dazu wird vorteilhafterweise die User Band-ID des Empfangsteils, welche mit dem Steuerbefehl des Steuersignals übermittelt wird, durch eine User Band-ID der Antennensteckdose ersetzt. Dabei ist die Antennensteckdose oder die Kontrolleinheit der Antennensteckdose vorzugsweise geeignet, mehr als acht User-IDs zu unterstützen.

Ein weiterer unabhängiger Gegenstand der Erfindung ist ein Verfahren zum Betreiben einer Antennensteckdose in einer Empfangsanlage, wobei ein Steuersignal empfangen wird, bevorzugt über einen Abzweig, der mit einem Empfangsgerät verbunden ist, dieses Steuersignal mit Berechtigungskonfigurationsdaten verglichen und dieser Vergleich ausgewertet wird, wobei das Steuersignal in Abhängigkeit von der Auswertung auf eine Stammleitung übertragen wird. Vorteilhafterweise wird das Steuersignal geblockt oder verändert, falls die Auswertung eine nicht ausreichende Berechtigung ergibt. Das Verändern ist vorzugsweise eine inhaltliche oder syntaktische Veränderung des Steuersignals. Unter "nicht ausreichender Berechtigung" ist auch zu verstehen, dass das Empfangsgerät lediglich acht User Band-IDs unterstützt oder verwendet und eine Umsetzung der User Band-ID durch inhaltliches oder syntaktisches Verändern eines Steuerbefehls in der Antennensteckdose stattfindet und ein Weiterleiten anschließend stattfindet. D.h., dass bei einem Verändern des Steuersignals das veränderte Steuersignal anschließend oder zu einem späteren Zeitpunkt übertragen wird. Vorteilhafterweise wird überprüft, ob auf der Stammleitung eine Übertragung eines weiteren Steuersignals stattfindet. Beispielsweise könnte ein anderes Empfangsgerät oder eine andere Antennensteckdose gerade ein Steuersignal übertragen. In diesem Fall wird vorteilhafterweise das Steuersignal, d.h. das "eigene" Steuersignal, zwischengespeichert und zu einem späteren Zeitpunkt übermittelt. Vorzugsweise werden die Berechtigungskonfigurationsdaten von einer entfernten Kontrollstation empfangen und in dem ersten Speicher gespeichert. Dies bietet den Vorteil, dass nicht eine Wartungsarbeit an der Antennensteckdose notwendig ist, um die Berechtigungskonfigurationsdaten zu verändern.

### Kurze Beschreibung der Zeichnungen

Nachfolgend wird die Erfindung anhand einiger Zeichnungen erläutert, die zeigen:
Fig. 1 zeigt schematisch den Aufbau einer Satellitenempfangsanlage in einem Mehrfamilienhaus, wobei in der Satellitenempfangsanlage erfindungsgemäße Antennensteckdosen eingesetzt werden; und
Fig. 2 zeigt den Aufbau einer erfindungsgemäßen Antennensteckdose detaillierter.

### Beschreibung eines bevorzugten Ausführungsbeispiels

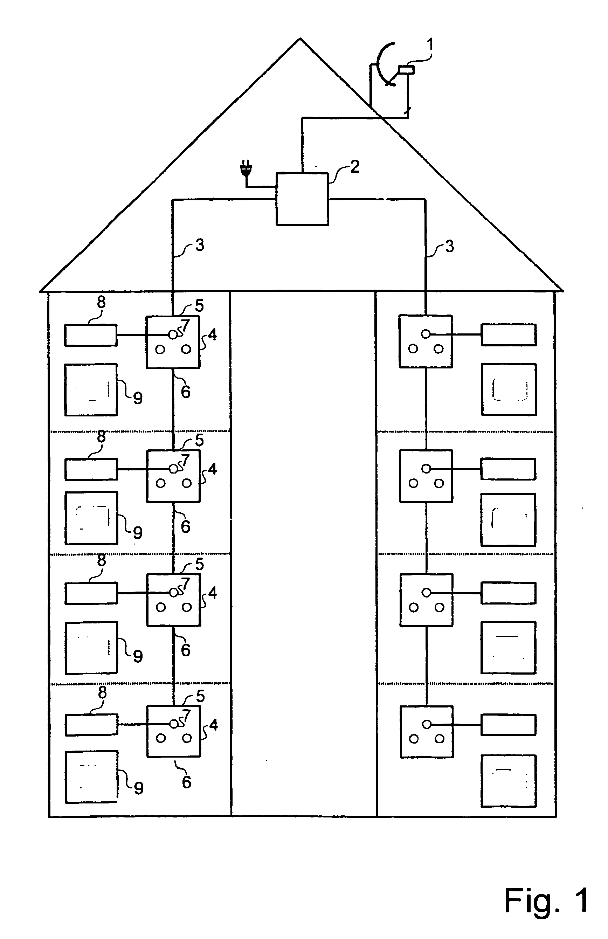

Die Fig. 1 zeigt eine Satellitenempfangsanlage mit einer Satellitenantenne 1, die über vier Leitungen mit einem Frequenzumsetzer 2 verbunden ist. Der Frequenzumsetzer 2 ist über jeweils eine Leitung 3 eines Ein-Kabel-Systems mit Antennensteckdosen 4 verbunden. Es sollte angemerkt werden, dass nur ein Teil der Antennensteckdosen und der daran angeschlossenen Elemente mit Bezugszeichen versehen ist, um die Übersichtlichkeit zu erhöhen.

Jede der Antennensteckdosen 4 verfügt über einen Stammleitungseingang 5 und einen Stammleitungsausgang 6, über welchen die Stammleitung 3 oder die eine Leitung 3 jeweils durch die Antennensteckdose 4 durgeschleift wird. An einem Abzweig greift ein Empfangsgerät 8 einen bestimmten Frequenzbereich ab, welcher durch den Umsetzer 2 für dieses Empfangsgerät 8 bereitgestellt wird. Das Empfangsgerät 8 kann auch Steuersignale über den Abzweig 7 auf die Stammleitung 3 zur Umschaltung des Frequenzumsetzers 2 senden, falls in dem jeweiligen Übertragungsbereich des jeweiligen Empfangsgerätes 8 ein anderer Frequenzbereich der Originalsignale der Satellitenantenne 1 übertragen werden soll. An den Empfangsgeräten 8 ist jeweils ein Fernseher 9 angeschlossen, über welchen ein Teilnehmer das ausgewählte Fernsehprogramm betrachten kann.

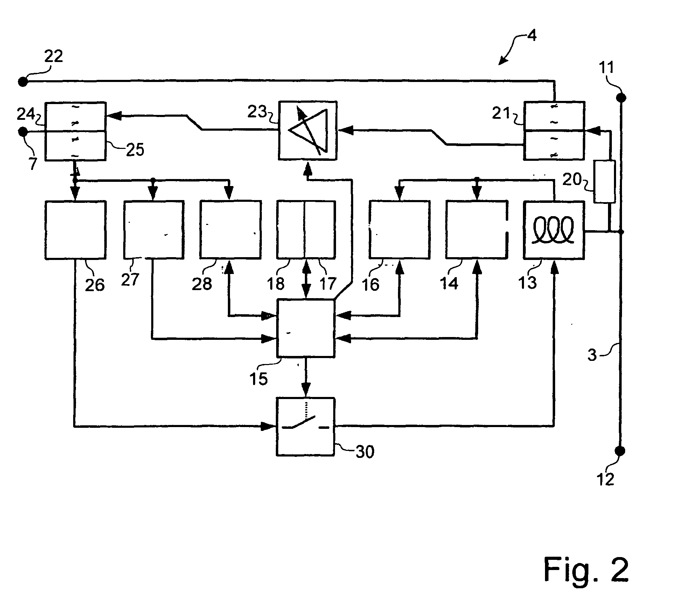

Die Fig. 2 zeigt einen symbolischen Aufbau einer erfindungsgemäßen Antennensteckdose 4. Im Zusammenhang mit der Beschreibung der Fig. 2 werden dieselben Bezugszeichen für gleiche oder ähnliche Teile wie in der Fig. 1 verwendet.

Die Antennensteckdose 4, welche in der Fig. 2 schematisch gezeigt ist, verfügt über einen Stammleitungseingang 11 und einen Stammleitungsausgang 12. Zwischen dem Stammleitungseingang 11 und dem Stammleitungsausgang 12 wird die Stammleitung 3 durch die Antennensteckdose 4 durchgeschleift. Die auf der Stammleitung 3 anliegenden Signale des Frequenzumsetzers 2 (Fig. 1) werden dabei durch die Antennensteckdose 4 hindurchgeführt. Über einen Stammleitungsseitigen Tiefpassfilter 13 werden Steuer- oder Konfigurationsdaten oder die Spannung auf der Ableitung von hochfrequenten Signalteilen getrennt und einer Schaltungseinheit 14 zugeführt. Die Schaltungseinheit 14 wandelt die anliegende Spannung auf ein niedrigeres Niveau, sodass eine Kontrolleinheit 15 der Antennensteckdose 4 das Spannungsniveau auf der Stammleitung 3 ermitteln kann. Dies dient dazu, um festzustellen, ob auf der Stammleitung 3 beispielsweise eine Übertragung stattfindet oder nicht. Weiterhin wird das gefilterte Signal aus dem Stammleitungs-seitigen Tiefpassfilter 13 einem Stammleitungs-seitigen Bus-Modem 16 zugeführt, das ermöglicht, Steuer- oder Konfigurationsdaten einer Auswertung durch die Kontrolleinheit 15 zuzuführen. Das Stammleitungs-seitige Bus-Modem 16 ist dazu geeignet, Steuerbefehle und Konfigurationsdaten, welche über die Stammleitung 3 übertragen werden, auszuwerten und der Kontrolleinheit 15 zuzuführen.

Die Kontrolleinheit 15 speichert empfangene Konfigurationsdaten in einem ersten Speicher 17 ab. Der erste Speicher 17 ist ein nicht flüchtiger Speicher. Daneben verfügt die Antennensteckdose 4 noch über einen flüchtigen Speicher 18, dessen Verwendung später erläutert wird. Die Daten in dem ersten Speicher 17 bleiben auch nach einem Verlust der Versorgungsspannung erhalten.

Die hochfrequenten Signalanteile der Stammleitung 3 werden über eine Übertragungseinheit 20 einem ersten Filter 21 zugeführt. Der erste Filter 21 trennt höherfrequente Signale der Satellitenzwischenfrequenz, welche durch den Frequenzumwandler bereitgestellt wird, von eventuell noch anderen vorhandenen niederfrequenten Signalanteilen, beispielsweise von Kabelfernsehen- oder terrestrischen Rundfunkübertragungen. Letztere werden direkt an einer Buchse 22 dem Teilnehmer zur Verfügung gestellt während die höherfrequenten Signalanteile der Satellitenzwischenfrequenz einem Verstärker 23 mit einstellbarem Dämpfungsglied zugeführt werden. Auf diese Weise lässt sich, bevorzugt auch durch eine entfernte Steuerung oder durch eine Regelung unter Ausnutzung der Kontrolleinheit 15, ein Signalpegel einstellen. Das pegelmäßig angepasste Signal wird über einen Hochpass 24 an einem teilnehmerseitigen Abzweig 7, auch Sat-Buchse genannt, bereitgestellt. Dort wird das Empfangsgerät 8 (Fig. 1) angeschlossen.

Außerdem werden über den Abzweig 7 auch Steuersignale von dem Empfangsgerät 8 (Fig. 1) empfangen. Diese Steuersignale werden über einen teilnehmerseitigen Tiefpassfilter 25 verschiedenen weiteren Einrichtungen der Antennensteckdose 4 zugeführt. Über den teilnehmerseitigen Tiefpassfilter 25 wird außerdem eine Versorgungsspannung für die Antennensteckdose 4 bereitgestellt. Die Versorgungsspannung wird in einer Versorgungsspannungsschaltung 26 aufbereitet, um die verschiedenen Einheiten der Antennensteckdose 4 unter Umständen mit unterschiedlichen Spannungen zu versorgen. Weiterhin ist der teilnehmerseitige Tiefpassfilter 25 mit einer Potenzialanpassung 27 verbunden, welche das Potenzial der Spannung herabsetzt, sodass es durch die Kontrolleinheit 15 erfasst werden kann. Auf diese Weise kann die Kontrolleinheit 15 die Spannung an dem Abzweig 7 ermitteln. Weiterhin ist an dem teilnehmerseitigen Tiefpassfilter 25 ein teilnehmerseitiges Modem 28 angeschlossen, welches dazu dient, Informationen, welche durch das Empfangsgerät (Fig. 1) über den Abzweig 7 übertragen werden, so aufzubereiten, dass die Kontrolleinheit 15 diese auswerten kann. Das eingehende Signal ist dabei in der Regel ein Tone-/Burst-Signalgemisch, welches durch das teilnehmerseitige Modem 28 aufbereitet wird.

Eingehende Steuersignale, welche durch das Modem 28 entschlüsselt wurden, werden durch die Kontrolleinheit 15 ausgewertet. Dabei überprüft die Kontrolleinheit 15 insbesondere, ob die Steuersignale den in dem nicht flüchtigen Speicher 17 abgelegten Konfigurationsdaten entsprechen, d.h. ob Steuersignale beispielsweise mit der richtigen User-ID seitens des Empfangsgeräts an die Kontrolleinheit 15 gesendet werden. Sollte festgestellt werden, dass die User-ID, welche das Empfangsgerät verwendet, nicht den Konfigurationsdaten oder den Berechtigungsdaten entspricht, so kann die Kontrolleinheit 15 die entsprechenden Steuersignale des Empfangsgeräts blocken oder Steuerbefehle des Steuersignals derart verändern, dass sie die richtige User Band-ID (oder kurz: User-ID) betreffen. Solche Befehle sind umsetzungsbezogene Daten, welche auf den Frequenzumsetzer bezogen sind. Anders ausgedrückt wird der User Band-ID des Empfängers ("Empfangsteil-User Band-ID") besondere Beachtung geschenkt, die im Steuerbefehl enthalten ist. Diese wird mit der eingestellten User Band-ID der Antennensteckdose ("Ableitungs-User Band-ID"), die sich in den Konfigurationsdaten auf dem nicht flüchtigen Datenspeicher befindet, verglichen. Kommt es zu keiner Übereinstimmung der Identifikationsnummern, wird der Befehl als unerlaubter Steuerbefehl eingestuft und verworfen oder der Befehl wird verändert, wobei die User-ID enstprechend geändert wird. Welche dieser Möglichkeiten gewählt wird, hängt von der einstellbaren Konfiguration der Kontrolleinheit 15 ab.

Dadurch kann eine Gefährdung des ordnungsgemäßen Betriebs der Anlage, insbesondere des Frequenzumsetzers 2 (Fig. 1) vermieden werden. Bei einer Übereinstimmung der verglichenen Identifikationsnummern überprüft die Kontrolleinheit 15 in einem nächsten Schritt die aktuellen Bedingungen auf der Stammleitung 3. Dazu wird das Spannungspotenzial auf der Stammleitung 3 über die oben genannten Einrichtungen ermittelt und dadurch überprüft, ob im Moment Steuersignale über die Stammleitung 3 übertragen werden. Ist dies der Fall, werden die von dem Empfänger 8 empfangenen Steuersignale in dem zweiten Speicher 18 zwischengespeichert und es wird abgewartet, bis die Stammleitung 3 wieder "frei" ist. Dabei bereitet die Kontrolleinheit 15 das Senden der Steuersignale dadurch vor, dass das Spannungspotenzial der Stammleitung 3 durch eine Schaltungseinheit 30 auf ein entsprechendes Spannungspotenzial angepasst wird. Die Schaltungseinheit 30 ist über den stammleitungsseitigen Tiefpassfilter 13 mit der Stammleitung 3 verbunden. Die Schaltungseinheit 30 ist durch die Kontrolleinheit 15 ansteuerbar. Dabei werden die empfangenen und als gültig eingestuften Steuerbefehle des Steuersignals von der Kontrolleinheit 15 erneut generiert und auf dem stammleitungsseitigen Modem 16 verarbeitet und auf die Stammleitung 3 aufgebracht.

Zusammenfassend betrachtet dient die so konfigurierte Antennensteckdose in dieser Betriebsart der Verhinderung oder Filterung von Steuersignalen, die mit unerwünschten Dateninhalten in das System eingebracht werden würden und zum anderen der Vermeidung von Kollisionsproblemen, da der Zustand von Datenübertragungen auf der Stammleitung vor jeder Übertragung von Steuersignalen überprüft wird.

Bei einer Verwendung der Kontrolleinheit 15 zum syntaktischen oder inhaltlichen Verändern oder Aufbereiten von Steuerbefehlen des Steuersignals ermöglicht die erfindungsgemäße Antennensteckdose 4, wie sie in Fig. 2 gezeigt ist, durch eine Translation von Steuerbefehlen oder durch eine inhaltliche Veränderung von Steuerbefehlen, wie z.B. der Änderung der Empfangsteil-User Band-ID einen Betrieb von mehr als beispielsweise acht Geräten an einem Frequenzumsetzer 2, in dem herkömmliche Empfangsgeräte 8 an den erfindungsgemäßen Antennensteckdosen 4 betrieben werden, wobei der Frequenzumsetzer 2 wiederum dazu geeignet ist, mehr als acht User Band-ID zu unterscheiden und die Antennensteckdose 4 entsprechend ebenfalls mehr als acht verschiedene User-IDs verwalten kann, sodass eine Umsetzung der User Band-ID von dem Abzweig 7 auf die Stammleitung 3 durch die erfindungsgemäße Antennensteckdose 4 möglich ist. Weiterhin kann auch eine syntaktische Veränderung von Steuersignalen vorgenommen werden, beispielsweise Protokollmodifikationen, Burst-Frequenz-Modifikationen oder Timing-Modifikationen. Dies bietet den Vorteil, Schwachstellen bekannter Geräte zu eliminieren, den Funktionsumfang der Systeme zu erweitern und die Effektivität teilnehmergesteuerter Satellitenzwischenfrequenzumsetzer zu steigern.

## Patentansprüche

1. Antennensteckdose (4), insbesondere konfigurierbare Antennensteckdose (4) für den Betrieb in einer Satelittenempfangsanlage, mit
einem Stammleitungseingang (11) zum Anschluss einer Stammleitung (3),
einem mit dem Stammleitungseingang (11) verbundenen Abzweig (7) für ein Empfangsgerät (8),
**gekennzeichnet durch**
einen ersten Speicher (17) zum Speichern von Berechtigungs-Konfigurationsdaten und
eine Kontrolleinheit (15), die konfiguriert ist, um ein über den Abzweig (7) eingehendes Steuersignal in Abhängigkeit der Berechtigungs-Konfigurationsdaten über den Stammleitungseingang (11) auf die Stammleitung (3) zu übertragen.

2. Antennensteckdose (4) nach Anspruch 1, **gekennzeichnet durch** einen zweiten Speicher zum Zwischenspeichern des Steuersignals.

3. Antennensteckdose (4) nach einem der vorhergehenden Ansprüche, **dadurch gekennzeichnet, dass** die Kontrolleinheit (15) einen Mikrokontroller umfasst.

4. Antennensteckdose (4) nach einem der vorhergehenden Ansprüche, **gekennzeichnet durch** einen mit dem Abzweig (7) verbundenen Tiefpassfilter (13).

5. Antennensteckdose (4) nach einem der vorhergehenden Ansprüche, **gekennzeichnet durch** ein einstellbares Dämpfungsglied und/oder einen einstellbarer Verstärker (23) zwischen dem Stammleitungseingang (11) und dem Abzweig (7).

6. Antennensteckdose (4) nach einem der vorhergehenden Ansprüche, **gekennzeichnet durch** eine Kommunikationseinheit, die geeignet ist, um über die Stammleitung (3) mit einer entfernten Kontrollstation zum kommunizieren.

7. Verfahren zum Betreiben einer Antennensteckdose (4) in einer Empfangsanlage, insbesondere einer Satellitenempfangsanlage, mit den in der Antennensteckdose ausgeführten Schritten:
- Empfangen eines Steuersignals,
**gekennzeichnet durch**
- Auswerten eines Vergleichs des Steuersignals mit Berechtigungs-Konfigurationsdaten und
- Übertragen des Steuersignals in Abhängigkeit von der Auswertung auf eine Stammleitung (3).

8. Verfahren nach Anspruch 7, **gekennzeichnet durch** Blocken oder Verändern des Steuersignals, falls die Auswertung eine nicht ausreichende Berechtigung ergibt.

9. Verfahren nach Anspruch 7 oder 8, **dadurch gekennzeichnet, dass** die Berechtigungs-Konfigurationsdaten in einem ersten Speicher (17) gespeichert werden.

10. Verfahren nach einem der Ansprüche 7 bis 9, **dadurch gekennzeichnet, dass** das Steuersignal zwischengespeichert wird.

11. Verfahren nach Anspruch 10, **gekennzeichnet durch** Überprüfen, ob auf einer Stammleitung (3) eine Übertragung eines weiteren Steuersignals eines weiteren Empfangsgeräts stattfindet und Zwischenspeichern, falls die Überprüfung eine Übertragung eines weiteren Steuersignals ergibt.

12. Verfahren nach Anspruch 10 oder 11, **gekennzeichnet durch** Übertragen des zwischengespeicherten Steuersignals.

13. Verfahren nach einem der Ansprüche 7 bis 12, **gekennzeichnet durch** syntaktisches oder inhaltliches Verändern eines Steuerbefehls des Steuersignals vor dem Schritt des Übertragens.

14. Verfahren nach Anspruch 13, **dadurch gekennzeichnet, dass** die inhaltliche Veränderung eine Anpassung des Steuerbefehls an die Berechtigungskonfigurationsdaten umfasst.

15. Verfahren nach einem der Ansprüche 7 bis 14, **gekennzeichnet durch** Empfangen der Berechtigungskonfigurationsdaten von einer entfernten Kontrollstation und Speichern der Berechtigungskonfigurationsdaten in dem ersten Speicher (17).

## Claims

1. Aerial socket (4), in particular configurable aerial socket (4) for operation in a satellite receiving system, having
a trunk line input (11) for connecting to a trunk line (3),
a branch (7) for a receiving set (8), which branch is connected to the trunk line input (11),
**characterised by**
a first memory (17) for storing authorisation configuration data
and
a control unit (15) which is configured to transmit a control signal, arriving via the branch (7), to the trunk line (3) via the trunk line input (11), in dependence on the authorisation configuration data.

2. Aerial socket (4) according to Claim 1, **characterised by** a second memory for temporarily storing the control signal.

3. Aerial socket (4) according to one of the preceding claims, **characterised in that** the control unit (15) comprises a microcontroller.

4. Aerial socket (4) according to one of the preceding claims, **characterised by** a low-pass filter (13) connected to the branch (7).

5. Aerial socket (4) according to one of the preceding claims, **characterised by** an adjustable attenuator and/or an adjustable amplifier (23) between the trunk line input (11) and the branch (7).

6. Aerial socket (4) according to one of the preceding claims, **characterised by** a communication unit which is suitable for communicating with a remote control station via the trunk line (3).

7. Method for operating an aerial socket (4) in a receiving system, in particular a satellite receiving system, having the steps carried out in the aerial socket:
- receiving a control signal,
**characterised by**
- evaluating a comparison of the control signal with authorisation configuration data and
- transmitting the control signal to a trunk line (3) in dependence on the evaluation.

8. Method according to Claim 7, **characterised by** blocking or altering the control signal if the evaluation shows an insufficient authorisation.

9. Method according to Claim 7 or 8, **characterised in that** the authorisation configuration data are stored in a first memory (17).

10. Method according to one of Claims 7 to 9, **characterised in that** the control signal is temporarily stored.

11. Method according to Claim 10, **characterised by** checking whether a transmission of a further control signal of a further receiving set takes place on a trunk line (3) and temporarily storing the control signal if the check shows a transmission of a further control signal.

12. Method according to Claim 10 or 11, **characterised by** transmitting the temporarily stored control signal.

13. Method according to one of Claims 7 to 12, **characterised by** syntactic or contentual altering of a control command of the control signal before the transmitting step.

14. Method according to Claim 13, **characterised in that** the contentual alteration comprises an adaptation of the control command to the authorisation configuration data.

15. Method according to one of Claims 7 to 14, **characterised by** receiving the authorisation configuration data from a remote control station and storing the authorisation configuration data in the first memory (17).

## Revendications

1. Prise d'antenne (4), en particulier prise d'antenne configurable (4) destinée à fonctionner dans une installation de réception par satellite, avec une entrée de circuit combinant (11) pour la connexion d'un circuit combinant (3),
une dérivation (7), reliée à l'entrée de circuit combinant (11), pour un appareil de réception (8),
**caractérisée par**
une première mémoire (17) destinée à mémoriser des données de configuration d'autorisation, et
une unité de contrôle (15) qui est configurée pour transmettre un signal de commande entrant via la dérivation (7) en fonction des données de configuration d'autorisation, par l'intermédiaire de l'entrée de circuit combinant (11), au circuit combinant (3).

2. Prise d'antenne (4) selon la revendication 1, **caractérisée par** une deuxième mémoire destinée à la mémorisation intermédiaire du signal de commande.

3. Prise d'antenne (4) selon l'une des revendications précédentes, **caractérisée par le fait que** l'unité de contrôle (15) comporte un microcontrôleur.

4. Prise d'antenne (4) selon l'une des revendications précédentes, **caractérisée par** un filtre passe-bas (13) relié à la dérivation (7).

5. Prise d'antenne (4) selon l'une des revendications précédentes, **caractérisée par** un élément d'atténuation réglable et/ou un amplificateur réglable (23) entre l'entrée de circuit combinant (11) et la dérivation (7).

6. Prise d'antenne (4) selon l'une des revendications précédentes, **caractérisée par** une unité de communication qui convient pour communiquer, par l'intermédiaire du circuit combinant (3), avec une station de contrôle.

7. Procédé pour faire fonctionner une prise d'antenne (4) dans une installation de réception, en particulier une installation de réception par satellite, aux étapes réalisées dans la prise d'antenne consistant à:
- recevoir un signal de commande,
- évaluer une comparaison entre le signal de commande et les données de configuration d'autorisation, et
- transmettre le signal de commande en fonction de l'évaluation sur un circuit combinant (3).

8. Procédé selon la revendication 7, **caractérisé par** le blocage ou la modification du signal de commande au cas où l'évaluation donne une autorisation non satisfaisante.

9. Procédé selon la revendication 7 ou 8, **caractérisé par le fait que** les données de configuration d'autorisation sont mémorisées dans une première mémoire (17).

10. Procédé selon l'une des revendications 7 à 9, **caractérisé par le fait que** le signal de commande est mémorisé temporairement.

11. Procédé selon la revendication 10, **caractérisé par** le fait de vérifier si sur un circuit combinant (3) a lieu une transmission d'un autre signal de commande d'un autre appareil de réception et la mémorisation intermédiaire au cas où la vérification donne une transmission d'un autre signal de commande.

12. Procédé selon la revendication 10 ou 11, **caractérisé par** le fait de transmettre le signal de commande mémorisé temporairement.

13. Procédé selon l'une des revendications 7 à 12, **caractérisé par** le fait de modifier en syntaxe ou en contenu un ordre de commande du signal de commande avant l'étape de transmission.

14. Procédé selon la revendication 13, **caractérisé par le fait que** la modification en contenu comprend une adaptation de l'ordre de commande aux données de configuration d'autorisation.

15. Procédé selon l'une des revendications 7 à 14, **caractérisé par** le fait de recevoir les données de configuration d'autorisation d'une station de contrôle éloignée et de mémoriser les données de configuration d'autorisation dans la première mémoire (17).
